# EUROPEAN PATENT APPLICATION

(11) **EP 4 546 011 A1**
(43) Date of publication of application: **30.04.2025**
(21) Application number: 22952297.4
(22) Date of filing: 27.07.2022
(51) Int. Cl.: G01S 13/75

(54) **POSITIONING SYSTEM, AND METHOD**

(71) Applicant: Shenzhen Yinwang Intelligent Technologies Co., Ltd., Shenzhen, Guangdong 518129 (CN)
(72) Inventor: JIA, Xiaolin, Shenzhen, Guangdong 518129 (CN)
(74) Representative: MERH-IP Matias Erny Reichl Hoffmann Patentanwälte PartG mbB
(86) International application number: PCT/CN2022/108157
(87) International publication number: WO 2024/020833

(57) **Abstract**

This application discloses a positioning system and method, to provide positioning information of different precision, so as to meet positioning requirements of different application functions, and reduce hardware costs. The positioning system includes a first GNSS antenna, an in-vehicle communication apparatus, and a controller. The first GNSS antenna is configured to obtain satellite data, and transmit the satellite data to the in-vehicle communication apparatus. The in-vehicle communication apparatus is configured to determine first positioning information based on the satellite data and/or first IMU data, and transmit the satellite data to the controller. The controller is configured to determine second positioning information based on the satellite data and second IMU data. Precision of the second positioning information is higher than precision of the first positioning information. The positioning system can perform both low-precision positioning and high-precision positioning, and can meet positioning requirements of different application functions in an in-vehicle scenario. In addition, only one GNSS antenna needs to be designed. Therefore, hardware costs can be further reduced.

## Description

### TECHNICAL FIELD

This application relates to the field of intelligent vehicle technologies, and in particular, to a positioning system and method.

### BACKGROUND

A positioning and timing system is a key component of an intelligent vehicle, and functions including emergency call (ecall), map navigation, intelligent driving, and the like all require the system. With rapid development of intelligent driving technologies, a highperformance navigation and positioning technology is increasingly required.

When there is no high-precision positioning requirement (for example, an intelligent driving requirement), positioning may be implemented by using a low-precision algorithm module carried in an in-vehicle communication apparatus (for example, a T-Box). When there is a high-precision positioning requirement, positioning may be implemented by using a high-precision algorithm module carried in a combined positioning module. The combined positioning module and the in-vehicle communication apparatus are independently deployed.

However, when there is the high-precision positioning requirement, two independent global navigation satellite system (Global Navigation Satellite System, GNSS) antenna systems need to be deployed, and are separately used by the combined positioning module and the in-vehicle communication apparatus. This causes a problem of high hardware costs.

### SUMMARY

This application provides a positioning system and method, to provide positioning information of different precision, so as to meet positioning requirements of different application functions, and reduce hardware costs.

According to a first aspect, a positioning system is provided, including a first global navigation satellite system (Global Navigation Satellite System, GNSS) antenna, an in-vehicle communication apparatus, and a controller, where the first GNSS antenna is connected to the in-vehicle communication apparatus, and the controller is connected to the in-vehicle communication apparatus; the first GNSS antenna is configured to: obtain satellite data, and transmit the satellite data to the in-vehicle communication apparatus; the in-vehicle communication apparatus is configured to: determine first positioning information based on the satellite data and/or first inertial measurement unit (Inertial Measurement Unit, IMU) data, and transmit the satellite data to the controller; and the controller is configured to determine second positioning information based on the satellite data and second IMU data, where precision of the second positioning information is higher than precision of the first positioning information.

The positioning system provided in this embodiment of this application can perform both low-precision positioning (for example, the first positioning information) and high-precision positioning (for example, the second positioning information). Therefore, positioning requirements of different application functions in an in-vehicle scenario can be met. In addition, only one GNSS antenna needs to be designed for the positioning system. Compared with the conventional technology, components such as a GNSS antenna, a coaxial cable, a connector, and a power splitter can be reduced, and hardware costs of the positioning system can be further reduced.

In a possible design, the controller is specifically configured to determine the second positioning information based on the satellite data, the second IMU data, and real time kinematic (Real Time Kinematic, RTK) data. The second IMU data and the first IMU data may be the same or different (or sources of the second IMU data and the first IMU data may be the same or different).

In this design, on the basis of the satellite data and the second IMU data, the controller further combines the RTK data to perform positioning calculation, so that positioning precision of the controller can be further improved.

In a possible design, the controller is an intelligent driving controller or an intelligent cockpit controller, or a controller integrating a plurality of functions of driving control, cockpit control, or vehicle body control.

In this way, the controller may be integrated into an existing controller that requires high-precision positioning, and there is no need to separately dispose a module for dedicated high-precision positioning, thereby further reducing hardware costs.

In a possible design, the in-vehicle communication apparatus is further configured to: determine time information based on the satellite data, and distribute the time information to the controller, so that the controller may determine local reference time based on the time information distributed by the in-vehicle communication apparatus.

In this way, the controller and the in-vehicle communication apparatus can unify a time reference, and a time management solution of the positioning system can be simplified.

In a possible design, the controller is connected to the in-vehicle communication apparatus through a controller area network-flexible data-rate (Controller Area Network-Flexible Data-Rate, CAN-FD) or an in-vehicle Ethernet communication link; and the in-vehicle communication apparatus is configured to transmit the satellite data to the controller through the CAN-FD communication link or the in-vehicle Ethernet communication link.

In this way, a transmission delay of the satellite data can be reduced, data transmission reliability can be improved, and positioning efficiency of the controller can be improved.

In a possible design, the in-vehicle communication apparatus is configured to: when the controller is enabled, initialization is completed, and a function is normal, transmit the satellite data to the controller.

In this way, in a scenario in which initialization of the controller is not completed, the controller is not enabled, or a function is abnormal, the in-vehicle communication apparatus does not need to send the satellite data to the controller. This can avoid invalid transmission of the satellite data in the foregoing scenario, reduce device energy consumption, and improve data transmission reliability.

In a possible design, the in-vehicle communication apparatus is further configured to provide a first positioning service based on the first positioning information; and the controller is further configured to provide a second positioning service based on the second positioning information.

In this way, the positioning system may provide positioning services with different positioning precision, to meet application requirements of different application functions.

In a possible design, the system further includes an application function module, configured to: when receiving the first positioning service and the second positioning service, provide an application function based on the second positioning service.

In this way, when receiving two positioning services, the application function preferentially selects a high-precision positioning service to provide an application function, to ensure a positioning capability.

In a possible design, the application function includes one or more of map navigation, in-vehicle wireless communication (vehicle to everything, V2X), intelligent driving, and emergency call.

Certainly, this is merely an example rather than a limitation, and actually, another application function may be further included.

According to a second aspect, a positioning method is provided, including: an in-vehicle communication apparatus is configured to obtain satellite data from a first GNSS antenna; the in-vehicle communication apparatus is configured to determine first positioning information based on the satellite data and/or first inertia measurement unit IMU data; and the in-vehicle communication apparatus is configured to transmit the satellite data to a controller, where the satellite data is used to determine second positioning information, and precision of the second positioning information is higher than precision of the first positioning information.

In a possible design, the controller is an intelligent driving controller or an intelligent cockpit controller, or a controller integrating a plurality of functions of driving control, cockpit control, or vehicle body control.

In a possible design, the method further includes: the in-vehicle communication apparatus is configured to determine time information based on the satellite data; and the in-vehicle communication apparatus is configured to distribute the time information to the controller.

In a possible design, the controller is connected to the in-vehicle communication apparatus through a CAN-FD communication link or an in-vehicle Ethernet communication link; and that the in-vehicle communication apparatus is configured to transmit the satellite data to a controller includes: the in-vehicle communication apparatus is configured to transmit the satellite data to the controller through the CAN-FD communication link or the in-vehicle Ethernet communication link.

In a possible design, that the in-vehicle communication apparatus is configured to transmit the satellite data to a controller includes: when the controller is enabled, initialization is completed, and a function is normal, the in-vehicle communication apparatus transmits the satellite data to the controller.

In a possible design, the method further includes:
the in-vehicle communication apparatus is configured to provide a first positioning service based on the first positioning information.

According to a third aspect, a positioning method is provided, including: a controller is configured to receive satellite data from an in-vehicle communication apparatus; and the controller is configured to determine second positioning information based on the satellite data and second IMU data, where precision of the second positioning information is higher than precision of first positioning information, and the first positioning information is positioning information determined by the in-vehicle communication apparatus.

In a possible design, that the controller is configured to determine second positioning information based on the satellite data and second IMU data includes: the controller is configured to determine the second positioning information based on the satellite data, the second IMU data, and RTK data.

In a possible design, the controller is an intelligent driving controller or an intelligent cockpit controller, or a controller integrating a plurality of functions of driving control, cockpit control, or vehicle body control.

In a possible design, the method further includes: the controller is configured to receive time information from the in-vehicle communication apparatus.

In a possible design, the controller is connected to the in-vehicle communication apparatus through a CAN-FD communication link or an in-vehicle Ethernet communication link; and that the controller is configured to receive satellite data from an in-vehicle communication apparatus includes: the controller is configured to receive the satellite data from the in-vehicle communication apparatus through the CAN-FD communication link or the in-vehicle Ethernet communication link.

In a possible design, that the controller is configured to receive satellite data from an in-vehicle communication apparatus includes: when the controller is enabled, initialization is completed, and a function is normal, the controller is configured to receive the satellite data from the in-vehicle communication apparatus.

In a possible design, the method further includes: the controller is configured to provide a second positioning service based on the second positioning information.

According to a fourth aspect, a communication apparatus is provided, including modules/units/technical means configured to implement the method in the second aspect. For example, the communication apparatus includes: a receiving module, configured to obtain satellite data from a first GNSS antenna; a processing module, configured to determine first positioning information based on the satellite data and/or first inertia measurement unit IMU data; and a sending module, configured to transmit the satellite data to a controller, where the satellite data is used to determine second positioning information, and precision of the second positioning information is higher than precision of the first positioning information.

In a possible design, the controller is an intelligent driving controller or an intelligent cockpit controller, or a controller integrating a plurality of functions of driving control, cockpit control, or vehicle body control.

In a possible design, the processing module is further configured to determine time information based on the satellite data; and the sending module is further configured to distribute the time information to the controller.

In a possible design, the communications apparatus is connected to the controller through a CAN-FD communication link or an in-vehicle Ethernet communication link; and the sending module is configured to transmit the satellite data to the controller through the CAN-FD communication link or the in-vehicle Ethernet communication link.

In a possible design, the sending module is configured to: when the controller is enabled, initialization is completed, and a function is normal, transmit the satellite data to the controller.

In a possible design, the processing module is further configured to provide a first positioning service based on the first positioning information.

According to a fifth aspect, a controller is provided, including modules/units/technical means configured to implement the method in the third aspect. For example, the controller includes: a receiving module, configured to receive satellite data from an in-vehicle communication apparatus; and a processing module, configured to determine second positioning information based on the satellite data and second IMU data, where precision of the second positioning information is higher than precision of first positioning information, and the first positioning information is positioning information determined by the in-vehicle communication apparatus.

In a possible design, the processing module is configured to determine second positioning information based on the satellite data, the second IMU data, and RTK data.

In a possible design, the controller is an intelligent driving controller or an intelligent cockpit controller, or a controller integrating a plurality of functions of driving control, cockpit control, or vehicle body control.

In a possible design, the receiving module is further configured to receive time information from the in-vehicle communication apparatus.

In a possible design, the controller is connected to the in-vehicle communication apparatus through a CAN-FD communication link or an in-vehicle Ethernet communication link; and the receiving module is configured to receive satellite data from the in-vehicle communication apparatus through the CAN-FD communication link or the in-vehicle Ethernet communication link.

In a possible design, the receiving module is configured to: when the controller is enabled, initialization is completed, and a function is normal, receive the satellite data from the in-vehicle communication apparatus.

In a possible design, the processing module is further configured to provide a second positioning service based on the second positioning information.

According to a sixth aspect, a communication apparatus is provided, including at least one processor and an interface circuit, where the interface circuit is configured to: receive a signal from an apparatus other than the apparatus, and send or receive the signal to the processor, or send a signal from the processor to an apparatus other than the apparatus, where the processor is configured to implement the method according to the second aspect, any one of the possible designs of the second aspect, the third aspect, or any one of the possible designs of the third aspect by using a logic circuit or executing code instructions.

According to a seventh aspect, an embodiment of this application provides a computer-readable storage medium. The computer-readable storage medium stores a computer program or instructions. When the computer program or the instructions are executed by a communication apparatus, the method according to the second aspect, any one of the possible designs of the second aspect, the third aspect, or any one of the possible designs of the third aspect is implemented.

According to an eighth aspect, a computer program product is provided. The computer program product stores instructions. When the computer program product runs on a computer, the computer is enabled to perform the method according to the second aspect, any one of the possible designs of the second aspect, the third aspect, or any one of the possible designs of the third aspect.

According to a ninth aspect, a terminal device is provided. The terminal device includes the positioning system according to the first aspect or any one of the possible designs of the first aspect.

For beneficial effects of the second aspect to the ninth aspect, refer to the corresponding designs and the beneficial effects in the first aspect. Details are not described again.

### BRIEF DESCRIPTION OF DRAWINGS

FIG. 1 is a schematic diagram of an application scenario according to an embodiment of this application;
FIG. 2A and FIG. 2B are schematic diagrams of two possible in-vehicle positioning systems;
FIG. 3 is a schematic diagram of a structure of a positioning system according to an embodiment of this application;
FIG. 4 is a schematic diagram of a specific structure of a positioning system according to an embodiment of this application;
FIG. 5 is a schematic diagram of another specific structure of a positioning system according to an embodiment of this application;
FIG. 6 is a schematic diagram of another specific structure of a positioning system according to an embodiment of this application;
FIG. 7 is a flowchart of a method for switching between a high-precision positioning mode and a low-precision positioning mode according to an embodiment of this application;
FIG. 8 is a flowchart of a positioning method according to an embodiment of this application;
FIG. 9 is a schematic diagram of a structure of a communication apparatus according to an embodiment of this application;
FIG. 10 is a schematic diagram of a structure of a controller according to an embodiment of this application; and
FIG. 11 is a schematic diagram of a structure of a communication apparatus according to an embodiment of this application.

### DESCRIPTION OF EMBODIMENTS

The following describes in detail embodiments of this application with reference to accompanying drawings.

The technical solutions provided in embodiments of this application may be applied to a terminal device having a positioning function. The terminal device may be an intelligent device having a positioning function, for example, including but not limited to: an intelligent transportation device like a car, a ship, an uncrewed aerial vehicle, a train, a cargo truck, or a truck; an intelligent manufacturing device like a robot, an industrial device, smart logistics, or a smart factory; and a smart home device like a television or a ground-sweeping robot. Alternatively, the terminal device may be a computer device having a positioning function, for example, a desktop computer, a personal computer, or a server. It should be further understood that the terminal device may alternatively be a portable electronic device having a positioning capability, for example, a mobile phone, a tablet computer, a palmtop computer, a headset, an acoustic device, a wearable device (for example, a smartwatch), an in-vehicle device, a virtual reality device, or an augmented reality device.

A specific type of the terminal device is not limited in embodiments of this application. For ease of description, an example in which the terminal device is an in-vehicle device is mainly used in this specification.

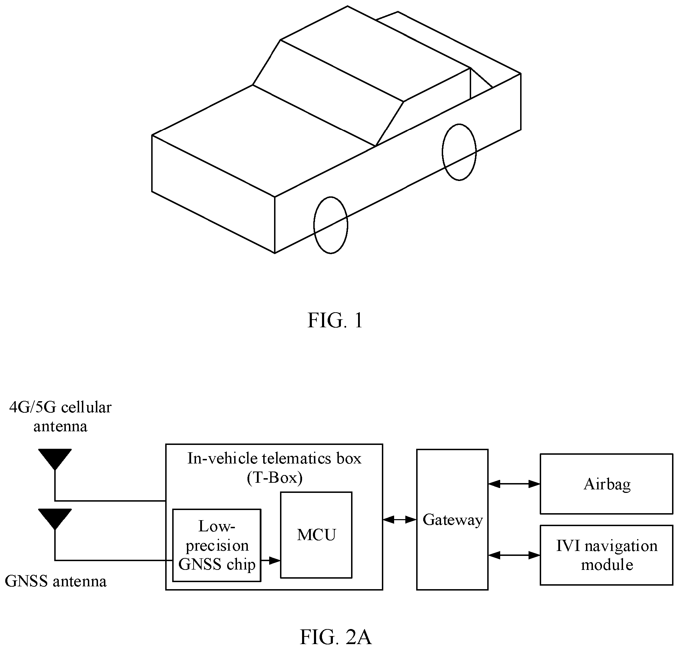

For example, FIG. 1 is a schematic diagram of an application scenario according to an embodiment of this application. In an in-vehicle scenario, functions such as emergency call (ecall), map navigation, and intelligent driving all need to be implemented by using an in-vehicle positioning system.

FIG. 2A is a schematic diagram of a possible in-vehicle positioning system. The system includes a telematics box (Telematics Box, T-Box), a global navigation satellite system (Global Navigation Satellite System, GNSS) antenna, a gateway, an airbag, an in-vehicle infotainment system (In-Vehicle Infotainment, IVI) navigation module, and the like. The T-Box includes an MCU and a GNSS chip. The GNSS chip may process an analog satellite signal received by a GNSS antenna, to obtain a digital satellite signal. The MCU may perform positioning calculation based on the digital satellite signal output by the GNSS chip, to obtain information such as a position, a speed, and time. In addition, the T-Box may further obtain IMU (Inertial Measurement Unit, IMU) information locally (for example, from an onboard inertial measurement unit) or from an IMU module of the airbag (in FIG. 2A, an IMU module of the airbag is used as an example), and perform fusion positioning based on the IMU information. In the system shown in FIG. 2A, positioning and timing of the entire in-vehicle positioning system are distributed by the T-Box.

However, limited by the performance of the T-Box, the system shown in FIG. 2A can perform only low-precision positioning (that is, the GNSS chip in the T-Box is a low-precision GNSS chip), and cannot meet a high-precision positioning requirement of an application function like intelligent driving.

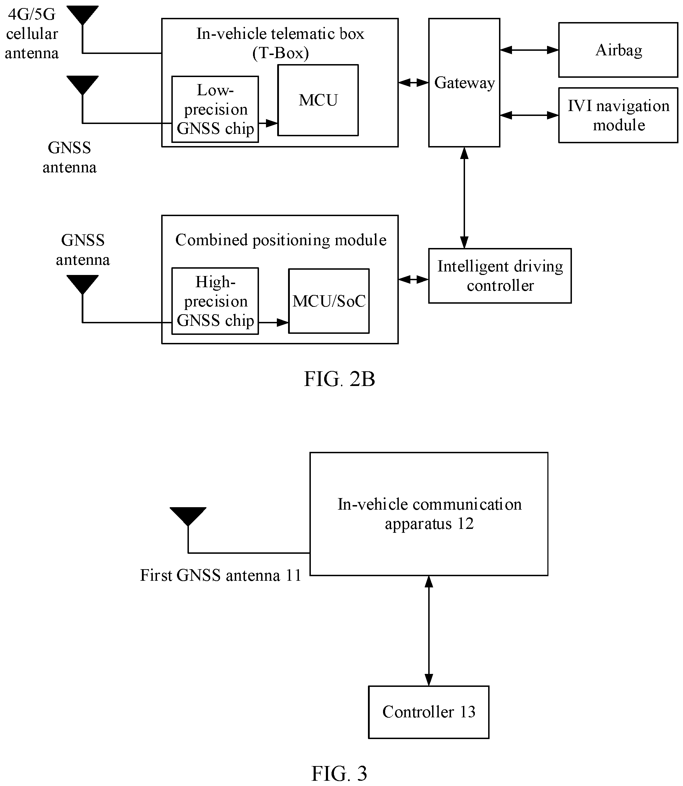

FIG. 2B is a schematic diagram of another possible in-vehicle positioning system. A difference from the system shown in FIG. 2A is as follows: 1. A combined positioning module (including a microcontroller unit (Microcontroller Unit, MCU) or a system-on-a-chip (System-On-a-Chip, SoC), a high-precision GNSS chip, and the like) is additionally added to the system, and is specially configured to carry a high-precision positioning function. The combined positioning module and the T-BOX are separately deployed. 2. Two independent GNSS antennas are deployed. A specific implementation is, for example, a deployment manner of dual GNSS antennas or a deployment manner of a single antenna + a power splitter + a coaxial cable (in FIG. 2B, an example in which two independent GNSS antennas are deployed is used). One GNSS antenna is responsible for transmitting a satellite signal to the T-Box for low-precision positioning, and the other GNSS antenna is responsible for transmitting a satellite signal to the combined positioning module for high-precision positioning.

The GNSS chip in the T-Box may be referred to as a low-precision GNSS chip, and the GNSS chip in the combined positioning module may be referred to as a high-precision GNSS chip.

It may be understood that high precision and low precision in this specification are relative concepts. In a possible implementation, a difference between the high-precision GNSS chip and the low-precision GNSS chip mainly lies in that the high-precision GNSS chip corresponds to more searched satellites (that is, satellites that are searched). For example, the low-precision GNSS chip generally supports global positioning system (Global Positioning System, GPS) single-frequency L1, and the high-precision GNSS chip may support dual-frequency or multi-frequency, for example, GPS L1/L2/L5 and BeiDou B1/B2/B3. L1, L2, and L5 indicate three frequency bands in the GPS, and B1, B2, and B3 indicate three frequency bands in a BeiDou Navigation Satellite System (BeiDou navigation satellite System, BDS). For details, refer to related definitions in the GPS and BDS.

However, in the system shown in FIG. 2B, a computing chip (for example, an MCU/SoC) and a GNSS antenna need to be added, to implement the combined positioning module, and hardware costs of the system are high. Further, the T-BOX and the combined positioning module each generate one type of time. As a result, the system has two types of reference time (for example, after the T-BOX and the combined positioning module both distribute the time to an intelligent driving controller, the intelligent driving controller has two types of time, a service plane of the intelligent driving controller uses the time generated by the combined positioning module as reference time, and a management plane of the intelligent driving controller uses the time generated by the T-BOX as reference time), and system time management is relatively complex.

To resolve the foregoing one or more technical problems, an embodiment of this application provides a positioning system and method.

FIG. 3 is a schematic diagram of a structure of a positioning system according to an embodiment of this application. The system includes a first global navigation satellite system GNSS antenna 11, an in-vehicle communication apparatus 12, and a controller 13. The first GNSS antenna 11 is connected to the in-vehicle communication apparatus 12, and the controller 13 is connected to the in-vehicle communication apparatus 12.

### 1. The first GNSS antenna 11

The first GNSS antenna 11 is configured to obtain satellite data. For example, the first GNSS antenna 11 may receive a satellite signal sent by a satellite, and the satellite signal is an analog signal. Specifically, for example, a satellite periodically broadcasts ephemeris data (Ephemeris Information) of the satellite, and the first GNSS antenna 11 may receive ephemeris data broadcast by one or more satellites.

It may be understood that a quantity and types of satellites are not limited in this embodiment of this application. For example, the type of the satellite includes but is not limited to a satellite of a GPS, a satellite of a global navigation satellite system (Global Navigation Satellite System, GLONASS), a satellite of a BeiDou navigation satellite system (BeiDou navigation satellite System, BDS), a satellite of a quasi-zenith satellite system (Quasi-Zenith Satellite System, QZSS), and/or a satellite of a satellite based augmentation system (Satellite Based Augmentation System, SBAS).

After obtaining the satellite data, the first GNSS antenna 11 may transmit the satellite data to the in-vehicle communication apparatus 12.

### 2. The in-vehicle communication apparatus 12

The in-vehicle communication apparatus 12 is configured to determine first positioning information based on the satellite data and/or first inertia measurement unit (Inertial Measurement Unit, IMU) data.

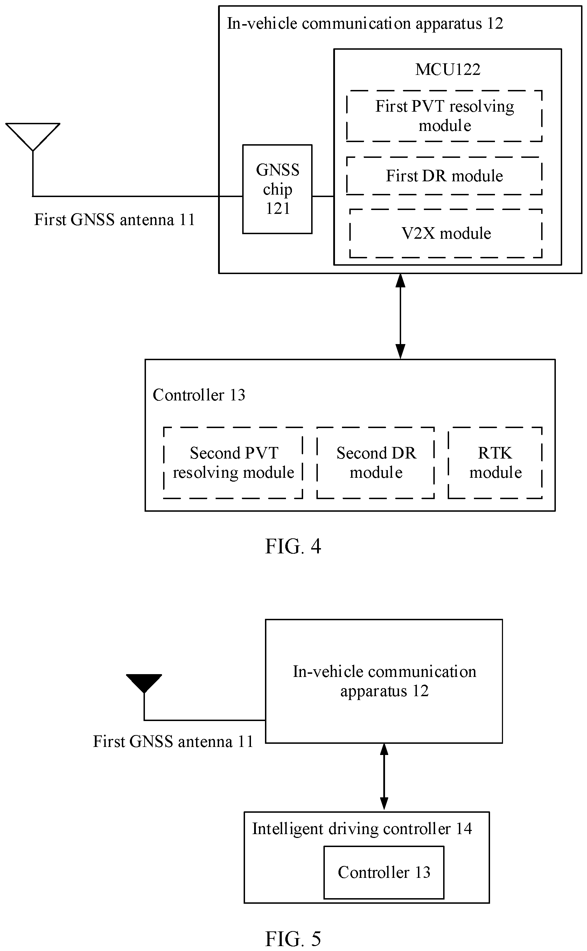

During specific implementation, as shown in FIG. 4, the in-vehicle communication apparatus 12 includes one GNSS chip 121 and one processing chip, and the processing chip is specifically, for example, an MCU 122.

The satellite data output by the first GNSS antenna 11 is an analog signal. The GNSS chip 121 is configured to perform processing such as analog-to-digital conversion and ephemeris parsing on the satellite data output by the first GNSS antenna 11, to obtain satellite data in a digital signal form.

In a possible design, a quantity of searched satellites of the GNSS chip 121 is greater than a preset value. In this way, it can be ensured that the satellite data output by the GNSS chip 121 has high precision, and positioning requirements of both the in-vehicle communication apparatus 12 and the controller 13 can be met.

A first position velocity time (Position Velocity time, PVT) resolving module (a specific implementation of the module may be a computer program, instructions, or the like) is disposed in the MCU 122, and is configured to perform calculation on the satellite data output by the GNSS chip 121, to obtain information such as a position, a speed, and time of a positioned device (for example, a terminal device in which the positioning system is located, for example, a vehicle or an in-vehicle terminal).

Optionally, as shown in FIG. 4, a first dead reckoning (Dead Reckoning, DR) module may be further disposed in the MCU 122, and is configured to perform positioning calculation based on the first IMU data to obtain information such as a position and a traveling track. Specifically, dead reckoning is to obtain a displacement and a course of a vehicle from a previous position based on a speed and an angular velocity of the vehicle, and calculate a current position of the vehicle with reference to the previous position. The first IMU data may be obtained from an IMU in an airbag, or may be obtained locally (for example, from an onboard IMU). This is not limited in this application. The first DR module is disposed, to ensure that positioning calculation can still be implemented when satellite signal quality is poor (for example, the satellite signal is affected by factors such as radio signal blocking and multipath interference in a tunnel, a jungle, or a high-rise area).

It may be understood that in specific implementation, the MCU 122 may perform positioning based on a PVT technology, or may perform positioning based on a DR technology, or may perform fusion positioning based on the PVT technology and the DR technology. This is not limited in this application.

Optionally, as shown in FIG. 4, a communication module (for example, an in-vehicle wireless communication (vehicle to everything, V2X) module) may be further disposed in the MCU 122, to implement communication between the vehicle and another device. V2X is a nextgeneration information communication technology that connects a vehicle to everything. V represents a vehicle, and X represents any object that exchanges information with the vehicle. Currently, X mainly includes a vehicle, a person, roadside infrastructure, a network, and the like. Certainly, in actual application, the communication module may alternatively be implemented based on another technology, for example, a cellular communication technology. This is not limited in this application.

In a possible example, the in-vehicle communication apparatus 12 may be a T-Box.

In this embodiment of this application, the controller 13 is connected to the in-vehicle communication apparatus 12, and the in-vehicle communication apparatus 12 may further transmit satellite data (specifically, for example, the satellite data in the digital signal form that is output by the GNSS chip 121) to the controller 13, so that the controller 13 performs positioning.

### 3. The controller 13

The controller 13 is configured to determine second positioning information based on the satellite data (for example, in the digital signal form) transmitted by the in-vehicle communication apparatus 12 and/or second IMU data. Sources of the second IMU data and the first IMU data may be the same or different. In a possible example, the first IMU data is from the airbag, and the first IMU data is from the local onboard IMU. This is not limited in this application. The local onboard IMU may be integrated into the controller 13, or disposed outside the controller 13. This is not limited.

In specific implementation, as shown in FIG. 4, a second PVT resolving module and a second DR module may be disposed in the controller 13, and are respectively configured to perform calculation on the satellite data and the second IMU data, and perform fusion positioning calculation by using the PVT technology and the DR technology, to output the second positioning information. For specific implementation of the second PVT resolving module, refer to the foregoing first PVT resolving module. For specific implementation of the second DR module, refer to the foregoing first DR module. Details are not described herein again.

In a possible design, sources of satellite data used by the controller 13 and the in-vehicle communication apparatus 12 to perform positioning calculation are both the satellite data obtained by the first GNSS antenna 11. However, a difference lies in that when performing positioning calculation, the controller 13 and the in-vehicle communication apparatus 12 may select different data in the satellite data to perform positioning calculation. For example, precision of a data part used by the controller 13 is higher than precision of a data part used by the in-vehicle communication apparatus 12. Specifically, for example, the data used by the controller 13 corresponds to more searched satellites, and therefore, precision of the second positioning information determined by the controller 13 is higher than precision of the first positioning information determined by the in-vehicle communication apparatus 12.

For example, the satellite data output by the GNSS chip 121 in the in-vehicle communication apparatus 12 includes data of a GPS L1 frequency band, data of a BeiDou B1 frequency band, and data of a BeiDou B2 frequency band. The in-vehicle communication apparatus 12 determines the first positioning information based on the data of the GPS L1 frequency band (that is, single-frequency), and the controller 13 determines the second positioning information based on the data of the GPS L1 frequency band, the data of the BeiDou B1 frequency band, and the data of the BeiDou B2 frequency band (that is, multi-frequency).

In a possible design, precision of the first IMU data is lower than precision of the second IMU data. In this way, precision of the second positioning information determined by the controller 13 is higher than precision of the first positioning information determined by the in-vehicle communication apparatus 12.

It can be learned from the foregoing descriptions that the positioning system provided in this embodiment of this application can perform both low-precision positioning and high-precision positioning, and therefore can meet positioning requirements of different application functions in an in-vehicle scenario. In addition, only one GNSS antenna (namely, the first GNSS antenna 11) needs to be designed for an entire positioning system. Compared with the conventional technology, components such as a GNSS antenna, a coaxial cable, a connector, and a power splitter can be reduced, and hardware costs of the positioning system can be further reduced.

It should be noted that this specification uses an example of providing positioning information of two different precisions (namely, the first positioning information and the second positioning information). In actual application, a solution of providing positioning information of more than two different precisions may be further extended. For example, a controller is deployed with reference to a deployment manner of the controller 13. The controller may provide third positioning information. Precision of the third positioning information is different from precision of the second positioning information, and is different from precision of a first positioning service.

In a possible design, the controller 13 may specifically determine the second positioning information based on the satellite data, the second IMU data, and real time kinematic (Real Time Kinematic, RTK) data. In other words, the controller 13 may perform fusion positioning with reference to the PCT technology, the DR technology, and the RTK technology. For example, as shown in FIG. 4, an RTK module may be further disposed in the controller 13, and is configured to calculate the RTK data. The RTK data may be obtained by the in-vehicle communication apparatus 12 from a ground station (for example, a reference station or a central station), and forwarded to the controller 13.

It may be understood that the RTK positioning technology is a real-time dynamic positioning technology based on a carrier phase difference, and includes a conventional RTK positioning technology and a network RTK technology.

Implementation of the RTK positioning technology requires a reference station. The reference station continuously receives GNSS satellite information and can provide high-precision position information of the reference station in real time. The RTK positioning technology can achieve centimeter-level positioning in an open outdoor environment without obstacles. In the conventional RTK positioning technology, a reference station continuously observes GNSS satellite information, and transmits an observation result to a terminal device (for example, an in-vehicle terminal) in which the positioning system is located. The in-vehicle terminal resolves a precise position of the in-vehicle terminal by using a differential global navigation satellite system (Differential Global Navigation Satellite System, DGNSS) algorithm based on the GNSS satellite information of the reference station and a GNSS observation result of the in-vehicle terminal, and precision of the position may reach a centimeter level.

The network RTK technology is a positioning technology based on the conventional RTK technology. A basic principle of the network RTK technology is to set a plurality of reference stations and central stations in a large area. The central station is a device that has data computing and processing capabilities. The reference station continuously observes GNSS satellite information as required, and sends an observation result to the central station. The central station determines differential correction information based on initial position information sent by an in-vehicle terminal, and sends the differential correction information to the in-vehicle terminal. The initial position information is position information preliminarily determined by the in-vehicle terminal based on a satellite signal. According to a technical algorithm, the network RTK positioning technology can be divided into a virtual reference station (Virtual Reference Station, VRS) technology, a master-auxiliary concept (Master-Auxiliary Concept, MAC) technology, and a Flachen Korrecktur parameter (Flachen Korrektur Parameter, FKP) technology.

In this way, the controller 13 performs fusion positioning calculation based on the satellite data, the second IMU data, and the RTK data, so that positioning precision of the controller 13 can be further improved.

In a possible design, the controller 13 may be integrated into an existing controller that requires high-precision positioning. In this way, this type of controller can obtain high-precision positioning information more quickly, thereby improving service quality. For example, the controller 13 may be an intelligent driving controller, an intelligent cockpit controller, or a controller integrating a plurality of functions of driving control, cockpit control, or vehicle body control. In a specific example, as shown in FIG. 5, the controller 13 is integrated into an intelligent driving controller 14.

In this way, a module for high-precision positioning does not need to be separately disposed, and hardware costs can be further reduced.

In a possible design, the in-vehicle communication apparatus 12 is further configured to: determine time information based on the satellite data; and distribute the time information to all of components in the vehicle. All of the components in the vehicle include in-vehicle components that need the time information on the vehicle, for example, include but are not limited to the intelligent driving controller 14 (or the controller 13), an intelligent cockpit controller, and a gateway. Correspondingly, all of the components in the vehicle may determine local reference time based on the time information distributed by the in-vehicle communication apparatus 12.

The reference time includes time of a management plane and time of a service plane. The time of the management plane is mainly used for an event processing record of each processing module inside the controller 13, for example, at which time over the air technology (Over the Air Technology, OTA) upgrading is performed, and at which time a fault is detected. Time of a data plane is mainly used for time synchronization (for example, timestamp management of a radar or a camera) of the controller 13, convergence processing of sensors, path planning, vehicle control delivery, and the like, and is mainly used to provide time for a service layer.

In specific implementation, the time information may be distributed to all of the components in the vehicle by using a gateway through a time-sensitive networking (Time-Sensitive Networking, TSN) Ethernet (Ethernet, Eth) interface, or a controller area network (Controller Area Network, CAN) (specifically, for example, a controller area network-flexible data-rate (Controller Area Network-Flexible Data-Rate, CAN-FD)) + pulse per second (Pulse per second, PPS) interface, and the like. It may be understood that the interface in this specification may alternatively be described as a communication link, a transmission channel, or the like (for example, the CAN-FD interface may be described as a CAN-FD communication link). In addition, the in-vehicle scenario is used as an example in this specification, and the Ethernet in the in-vehicle scenario may also be referred to as an in-vehicle Ethernet.

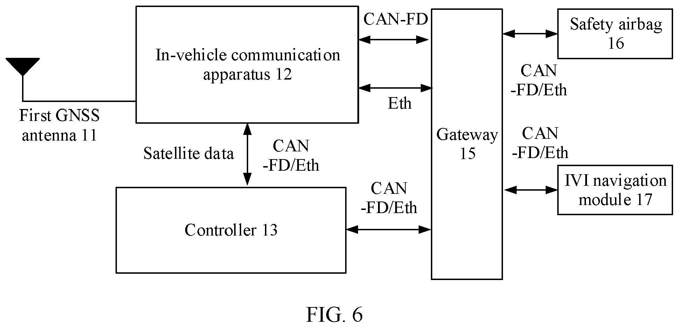

For example, as shown in FIG. 6, the positioning system may further include a gateway 15, an airbag 16, an IVI navigation module 17, and the like. There are two types of communication links between the gateway and the in-vehicle communication apparatus 12: a CAN-FD communication link and an Eth communication link. There is a CAN-FD communication link or an Eth communication link between the gateway 15 and the airbag 16, the IVI navigation module 17, the controller 13, and the like. The in-vehicle communication apparatus 12 may distribute the time information to the airbag 16, the IVI navigation module 17, the controller 13, and the like by using the gateway. It should be understood that FIG. 6 is merely an example rather than a specific limitation.

In this way, the components in the in-vehicle positioning system can unify a time reference, so that a time management solution of the in-vehicle device can be simplified. The controller 13 is used as an example. After receiving the time information distributed by the in-vehicle communication apparatus 12, the controller 13 determines local reference time based on the time information distributed by the in-vehicle communication apparatus 12, and the controller 13 may omit related calculation of the time information when performing PVT settlement on the satellite data, or after performing PVT settlement on the satellite data to obtain time information, discard the time information, thereby ensuring consistency between the reference time of the controller 13 and the reference time of the in-vehicle communication apparatus 12. In addition, because the time information is generated by the in-vehicle communication apparatus 12 and has high real-time performance, compared with that the controller 13 determines the time information based on the satellite data after receiving the satellite data, a problem of inaccurate time information caused by a delay in forwarding the satellite data on a link can be avoided, and accuracy of time in an entire vehicle can be improved.

In a possible design, a dedicated transmission channel is disposed between the controller 13 and the in-vehicle communication apparatus 12, and is used by the in-vehicle communication apparatus 12 to transmit the satellite data to the controller 13, for example, including but not limited to a CAN-FD communication link and an in-vehicle Ethernet communication link. For example, in FIG. 6, the dedicated transmission channel between the controller 13 and the in-vehicle communication apparatus 12 is a CAN-FD communication link or an Eth communication link.

In this way, a transmission delay of the satellite data can be reduced, data transmission reliability can be improved, and positioning efficiency of the controller 13 can be improved.

In a possible design, considering that an initialization speed of the controller 13 (for example, a SoC) is slower than an initialization speed of the in-vehicle communication apparatus 12 (for example, the T-Box), and the controller 13 is not turned on or a function is abnormal in some scenarios (for example, a scenario in which a battery power is insufficient and ultimate power saving starts), the in-vehicle communication apparatus 12 specifically transmits the satellite data to the controller 13 when the controller 13 is turned on, initialization is completed, and the function is normal.

In this way, invalid satellite data transmission can be avoided, energy consumption can be reduced, and data transmission reliability can be improved.

In a possible design, the in-vehicle communication apparatus 12 is further configured to provide a first positioning service based on the first positioning information (for example, specifically, generate the first positioning service based on the first positioning information and the time information). The controller 13 is further configured to provide a second positioning service based on the second positioning information (for example, specifically, generate the second positioning service based on the second positioning information and the time information). An application function module on the in-vehicle device may subscribe to the first positioning service from the in-vehicle communication apparatus 12 and/or subscribe to the second positioning service from the controller 13, to provide a corresponding application function based on the first positioning service and/or the second positioning service. The application function includes but is not limited to one or more of map navigation, vehicle wireless communication V2X, intelligent driving, emergency call, and the like.

For example, the application function is intelligent driving. The application function module may be the intelligent driving controller 14, and the intelligent driving controller 14 may provide an intelligent driving service (for example, self-driving or assisted driving) for the user based on the second positioning service.

For example, the application function is map navigation. The application function module may be an in-vehicle navigation system (for example, the in-vehicle navigation system is integrated into an intelligent cockpit controller), and the in-vehicle navigation system may provide a map navigation service for the user based on the first positioning service.

In this way, the positioning system may provide positioning services with different positioning precision for the in-vehicle device, to meet application requirements of different application functions.

In a possible design, when receiving only the first positioning service, the application function module provides an application function based on the first positioning service; or when receiving the first positioning service and the second positioning service, the application function module provides an application function based on the second positioning service. In other words, when receiving only one positioning service, the application function provides an application function based on the received positioning service, and when receiving two or more positioning services, preferentially selects a high-precision positioning service to provide an application function.

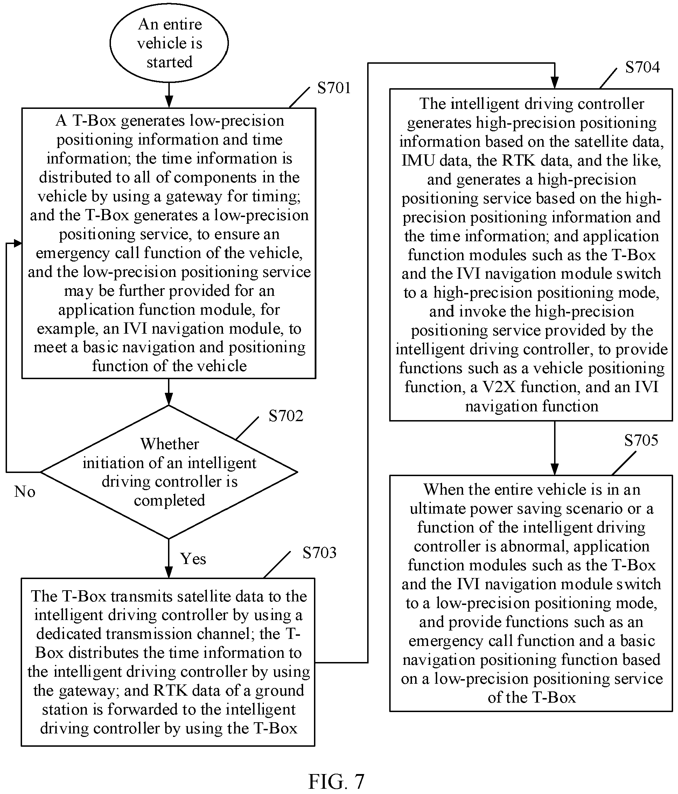

In a specific example, FIG. 7 shows a method for switching between a high-precision positioning mode and a low-precision positioning mode according to an embodiment of this application. A procedure includes the following steps.

S701: After an entire vehicle is started, a T-Box (corresponding to the in-vehicle communication apparatus 12) generates low-precision positioning information (corresponding to the first positioning information) and time information; the time information is distributed to all of components in the vehicle by using a gateway for timing; and the T-Box generates a low-precision positioning service (corresponding to the foregoing first positioning service), to ensure an emergency call function of the vehicle. In addition, the low-precision positioning service may be further provided for an application function module, for example, an IVI navigation module, to meet a basic navigation and positioning function of the vehicle.

S702: The T-Box monitors a status of an intelligent driving controller (corresponding to the controller 13), and determines whether initialization of the intelligent driving controller is completed; and if initialization is completed, continues to perform S703; otherwise, returns to S701.

S703: The T-Box transmits satellite data to the intelligent driving controller by using a dedicated transmission channel; the T-Box distributes the time information to the intelligent driving controller by using the gateway; and RTK data of a ground station is forwarded to the intelligent driving controller by using the T-Box.

S704: The intelligent driving controller generates high-precision positioning information (corresponding to the second positioning information) based on the satellite data, IMU data, the RTK data, and the like, and generates a high-precision positioning service (corresponding to the second positioning service) based on the high-precision positioning information and the time information; and application function modules such as the T-Box and the IVI navigation module switch to a high-precision positioning mode, and invoke the high-precision positioning service provided by an intelligent driving device, to provide functions such as vehicle positioning, V2X, and IVI navigation.

S705: When the entire vehicle is in an ultimate power saving scenario or a function of the intelligent driving controller is abnormal, application function modules such as the T-Box and the IVI navigation module switch to a low-precision positioning mode, and provide functions such as emergency call and basic navigation positioning based on the low-precision positioning service of the T-Box.

In this way, a vehicle-level positioning redundancy design can be implemented, and a positioning mode can be switched based on a scenario, thereby improving solution availability.

It may be understood that the foregoing design manners may be separately implemented, or may be implemented in combination with each other.

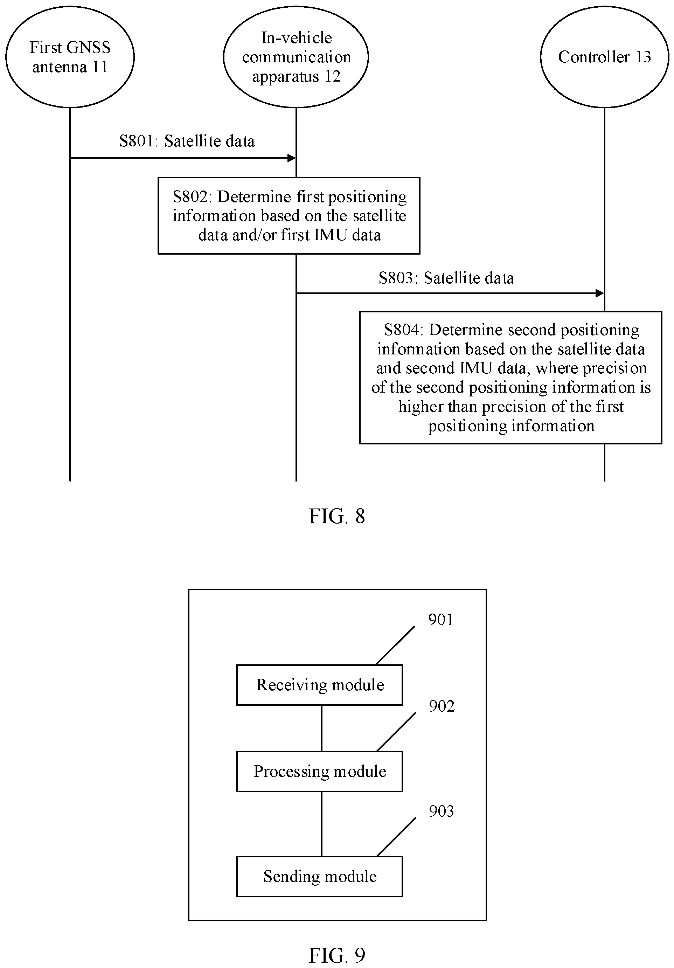

Refer to FIG. 8. Based on a same technical concept, an embodiment of this application further provides a positioning method, including the following steps.

S801: A first GNSS antenna 11 obtains satellite data, and transmits the satellite data to an in-vehicle communication apparatus 12. Correspondingly, the in-vehicle communication apparatus 12 receives the satellite data.

S802: The in-vehicle communication apparatus 12 determines first positioning information based on the satellite data and/or first inertia measurement unit IMU data.

S803: The in-vehicle communication apparatus 12 is configured to transmit the satellite data to a controller 13; and correspondingly, the controller 13 receives the satellite data.

It should be noted that a sequence of S802 and S803 is not limited in this application. For example, the in-vehicle communication apparatus 12 transmits the satellite data to the controller 13 after determining the first positioning information, or may transmit the satellite data to the controller 13 before determining the first positioning information, or may transmit the satellite data to the controller 13 while determining the first positioning information.

S804: The controller 13 determines second positioning information based on the satellite data and second IMU data, where precision of the second positioning information is higher than precision of the first positioning information.

For specific implementations of the foregoing method steps, refer to related descriptions in the foregoing. Details are not described herein again.

Refer to FIG. 9. Based on a same technical concept, an embodiment of this application further provides a communication apparatus. The apparatus includes modules/units/technical means configured to implement the method performed by the foregoing in-vehicle communication apparatus 12. The apparatus includes:
a receiving module 901, configured to obtain satellite data from a first GNSS antenna;
a processing module 902, configured to determine first positioning information based on the satellite data and/or first inertia measurement unit IMU data; and
a sending module 903, configured to transmit the satellite data to a controller, where the satellite data is used to determine second positioning information, and precision of the second positioning information is higher than precision of the first positioning information.

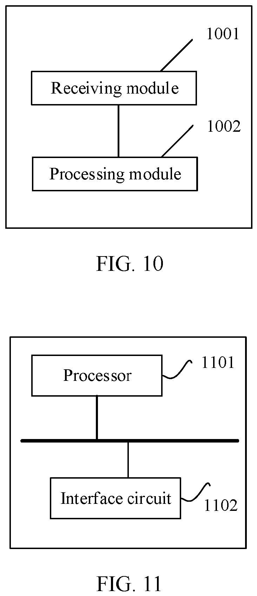

Refer to FIG. 10. Based on a same technical concept, an embodiment of this application further provides a controller, and the controller includes modules/units/technical means configured to implement the method performed by the foregoing controller 13. The controller includes:
a receiving module 1001, configured to receive satellite data from an in-vehicle communication apparatus; and
a processing module 1002, configured to determine second positioning information based on the satellite data and second IMU data.

Precision of the second positioning information is higher than precision of first positioning information, and the first positioning information is positioning information determined by the in-vehicle communication apparatus.

For a specific implementation in which the foregoing modules perform corresponding functions, refer to related descriptions in the foregoing positioning system. Details are not described herein again.

Refer to FIG. 11. Based on a same technical concept, an embodiment of this application further provides a communication apparatus. The apparatus includes at least one processor 1101 and an interface circuit 1102. The interface circuit 1102 is configured to receive a signal from an apparatus other than the apparatus 1100, and transmit the signal to the processor 1101, or send a signal from the processor 1101 to an apparatus other than the apparatus. The processor 1101 is configured to implement, by using a logic circuit or executing code instructions, the method performed by the in-vehicle communication apparatus 12, the controller 13, or the like.

It should be understood that the processor mentioned in this embodiment of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It should be understood that, the memory mentioned in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be noted that the memory described in this specification aims to include but is not limited to these memories and any memory of another proper type.

Based on a same technical concept, an embodiment of this application further provides a computer-readable storage medium, including a program or instructions. When the program or the instructions is/are run on a computer, the method performed by the in-vehicle communication apparatus 12 or the controller 13 is performed.

Based on a same technical concept, an embodiment of this application further provides a computer program product, and the computer program product stores instructions. When the instructions are run on a computer, the method performed by the in-vehicle communication apparatus 12 or the controller 13 is performed.

Based on a same technical concept, an embodiment of this application further provides a terminal device, including the foregoing positioning system. The terminal device may be a vehicle, an uncrewed aerial vehicle, a helicopter, aircraft, a ship, an intelligent transportation device, a smart home device, or the like. A specific form of the terminal device is not limited in embodiments of this application.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Clearly, a person skilled in the art can make various modifications and variations to this application without departing from the protection scope of this application. This application is intended to cover these modifications and variations of this application provided that they fall within the scope of protection defined by the following claims and their equivalent technologies.

In this application, at least one means one or more, and a plurality of means two or more. A term "and/or" describes an association relationship between associated objects and indicates that there may be three relationships. For example, A and/or B may represent the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

## Claims

1. A positioning system, comprising a first global navigation satellite system GNSS antenna, an in-vehicle communication apparatus, and a controller, wherein the first GNSS antenna is connected to the in-vehicle communication apparatus, and the controller is connected to the in-vehicle communication apparatus;
the first GNSS antenna is configured to: obtain satellite data, and transmit the satellite data to the in-vehicle communication apparatus;
the in-vehicle communication apparatus is configured to: determine first positioning information based on the satellite data and/or first inertia measurement unit IMU data, and transmit the satellite data to the controller; and
the controller is configured to determine second positioning information based on the satellite data and second IMU data, wherein
precision of the second positioning information is higher than precision of the first positioning information.

2. The system according to claim 1, wherein the controller is configured to determine the second positioning information based on the satellite data, the second IMU data, and real time kinematic RTK data.

3. The system according to claim 1 or 2, wherein the controller is an intelligent driving controller or an intelligent cockpit controller, or a controller integrating a plurality of functions of driving control, cockpit control, or vehicle body control.

4. The system according to any one of claims 1 to 3, wherein the in-vehicle communication apparatus is further configured to: determine time information based on the satellite data, and distribute the time information to the controller.

5. The system according to any one of claims 1 to 4, wherein the controller is connected through a controller area network-flexible data-rate CAN-FD communication link or an in-vehicle Ethernet communication link; and
the in-vehicle communication apparatus is configured to transmit the satellite data to the controller through the CAN-FD communication link or the in-vehicle Ethernet communication link.

6. The system according to any one of claims 1 to 5, wherein the in-vehicle communication apparatus is configured to: when the controller is enabled, initialization is completed, and a function is normal, transmit the satellite data to the controller.

7. The system according to claim 6, wherein
the in-vehicle communication apparatus is further configured to provide a first positioning service based on the first positioning information; and
the controller is further configured to provide a second positioning service based on the second positioning information.

8. The system according to claim 6, wherein the system further comprises:
an application function module, configured to: when receiving the first positioning service and the second positioning service, provide an application function based on the second positioning service.

9. The system according to claim 8, wherein the application function comprises one or more of map navigation, in-vehicle wireless communication V2X, intelligent driving, and emergency call.

10. A positioning method, comprising:
an in-vehicle communication apparatus is configured to obtain satellite data from a first GNSS antenna;
the in-vehicle communication apparatus is configured to determine first positioning information based on the satellite data and/or first inertia measurement unit IMU data; and
the in-vehicle communication apparatus is configured to transmit the satellite data to a controller, wherein the satellite data is used to determine second positioning information, and precision of the second positioning information is higher than precision of the first positioning information.

11. The method according to claim 10, wherein the controller is an intelligent driving controller or an intelligent cockpit controller, or a controller integrating a plurality of functions of driving control, cockpit control, or vehicle body control.

12. The method according to claim 10 or 11, further comprising:
the in-vehicle communication apparatus is configured to determine time information based on the satellite data; and
the in-vehicle communication apparatus is configured to distribute the time information to the controller.

13. The method according to any one of claims 10 to 12, wherein the controller is connected through a CAN-FD communication link or an in-vehicle Ethernet communication link; and
that the in-vehicle communication apparatus is configured to transmit the satellite data to a controller comprises:
the in-vehicle communication apparatus is configured to transmit the satellite data to the controller through the CAN-FD communication link or the in-vehicle Ethernet communication link.

14. The method according to any one of claims 10 to 13, wherein that the in-vehicle communication apparatus is configured to transmit the satellite data to a controller comprises:
when the controller is enabled, initialization is completed, and a function is normal, the in-vehicle communication apparatus transmits the satellite data to the controller.

15. The method according to claim 14, wherein the method further comprises:
the in-vehicle communication apparatus is configured to provide a first positioning service based on the first positioning information.

16. A positioning method, comprising:
a controller is configured to receive satellite data from an in-vehicle communication apparatus; and
the controller is configured to determine second positioning information based on the satellite data and second IMU data, wherein
precision of the second positioning information is higher than precision of first positioning information, and the first positioning information is positioning information determined by the in-vehicle communication apparatus.

17. The method according to claim 16, wherein that the controller is configured to determine second positioning information based on the satellite data and second IMU data comprises:
the controller is configured to determine the second positioning information based on the satellite data, the second IMU data, and RTK data.

18. The method according to claim 16 or 17, wherein the controller is an intelligent driving controller or an intelligent cockpit controller, or a controller integrating a plurality of functions of driving control, cockpit control, or vehicle body control.

19. The method according to any one of claims 16 to 18, wherein the method further comprises:
the controller is configured to receive time information from the in-vehicle communication apparatus.

20. The method according to any one of claims 16 to 19, wherein the controller is connected through a CAN-FD communication link or an in-vehicle Ethernet communication link; and
that a controller is configured to receive satellite data from an in-vehicle communication apparatus comprises:
the controller is configured to receive the satellite data from the in-vehicle communication apparatus through the CAN-FD communication link or the in-vehicle Ethernet communication link.

21. The method according to any one of claims 16 to 20, wherein that a controller is configured to receive satellite data from an in-vehicle communication apparatus comprises:
when the controller is enabled, initialization is completed, and a function is normal, the controller is configured to receive the satellite data from the in-vehicle communication apparatus.

22. The method according to claim 21, wherein the method further comprises:
the controller is configured to provide a second positioning service based on the second positioning information.

23. A communication apparatus, comprising:
a receiving module, configured to obtain satellite data from a first GNSS antenna;
a processing module, configured to determine first positioning information based on the satellite data and/or first inertia measurement unit IMU data; and
a sending module, configured to transmit the satellite data to a controller, wherein the satellite data is used to determine second positioning information, and precision of the second positioning information is higher than precision of the first positioning information.

24. A controller, comprising:
a receiving module, configured to receive satellite data from an in-vehicle communication apparatus; and
a processing module, configured to determine second positioning information based on the satellite data and second IMU data, wherein
precision of the second positioning information is higher than precision of first positioning information, and the first positioning information is positioning information determined by the in-vehicle communication apparatus.

25. A communication apparatus, comprising at least one processor and an interface circuit, wherein
the interface circuit is configured to: receive a signal from an apparatus other than the apparatus, and send or receive the signal to the processor, or send a signal from the processor to an apparatus other than the apparatus, wherein the processor is configured to implement the method according to any one of claims 10 to 15 by using a logic circuit or executing code instructions, or is configured to implement the method according to any one of claims 16 to 22.

26. A computer-readable storage medium, wherein the storage medium stores a computer program or instructions; and when the computer program or instructions is/are executed by a communication apparatus, the method according to any one of claims 10 to 15 or the method according to any one of claims 16 to 22 is implemented.

27. A computer program product, wherein the computer program product stores instructions, and when the instructions are run on a computer, the computer is enabled to perform the method according to any one of claims 10 to 15 or the method according to any one of claims 16 to 22.

28. A terminal device, comprising the positioning system according to any one of claims 1 to 9.
